# EUROPEAN PATENT SPECIFICATION

(11) **EP 2 888 939 B1**
(45) Date of publication and mention of the grant of the patent: **06.03.2019**
(21) Application number: 14200455.5
(22) Date of filing: 29.12.2014
(51) Int. Cl.: A01K 87/06

(54) **Reel seat having fiber-reinforced resin sheet in fixed hood and fishing rod having the reel seat**
Angelrollenhalter mit faserverstärkter Harzfolie in fester Haube und Angelrute mit dem Angelrollenhalter
Siège de moulinet de canne à pêche ayant une couche de résine renforcée par des fibres dans un capot fixe et canne à pêche ayant le siège de moulinet

(30) Priority: 27.12.2013 JP 2013272061
(43) Date of publication of application: 01.07.2015
(73) Proprietor: Globeride, Inc., Tokyo 203-8511 (JP)
(72) Inventor: Akiba, Masaru, Higashi Kurume-shi Tokyo 203-8511 (JP); Oikawa, Katsuhiro, Higashi Kurume-shi Tokyo 203-8511 (JP)
(74) Representative: Boult Wade Tennant LLP

(56) References cited:
- JP-A- 2005 151 929
- JP-A- 2009 247 299
- JP-A- 2011 067 123
- US-A- 4 726 139

## Description

### TECHNICAL FIELD

The present invention relates to a reel seat having a fiber-reinforced resin sheet in a fixed hood and a fishing rod having the reel seat.

### BACKGROUND

A reel is typically mounted on a fishing rod via a reel seat. Conventional reel seats comprises a reel seat body mounted on a rod of a fishing rod, a fixed hood mounted on the reel seat body and receiving one end of a reel leg, and a movable hood mounted on the reel seat body so as to be movable with respect to the fixed hood and receiving the other end of the reel leg. To mount a reel on such a reel seat, the one end of the reel leg is inserted into an opening in the fixed hood with the reel leg set on a reel leg setting surface of the reel seat body, while the movable hood is moved toward the fixed hood to insert the other end of the reel leg into an opening in the movable hood, such that the reel leg may be retained by the fixed hood and the movable hood.

In winding up a caught fish, the reel is pulled in a direction away from the rod due to a tension in the fishing line; therefore, the hood retaining the reel leg undergoes a strong tension in the direction away from the reel leg setting surface. To prevent damage on the hood due to such a tension, there is a demand for reinforcing the hood of the reel seat.

In view of the above, Japanese Patent Application Publication NO. 2007-202407 (Patent Literature 1) disclosed a reel seat having its hood formed of a fiber-reinforced resin for reinforcement of the hood. Additionally, Japanese Utility Model Registration Publication No. 2506854 (Patent Literature 2) disclosed a reel leg crimping hood which is entirely formed of a fiber-reinforced resin. In this case, the hood is formed of a fiber-reinforced resin for reinforcement of the hood.

[Patent Literature 1] Japanese Patent Application Publication No. 2007-202407
[Patent Literature 2] Japanese Utility Model Registration Publication No. 2506854

### SUMMARY

Since fibers have higher specific gravities, fiber-reinforced resins have larger weights than ordinary resins. Therefore, if the hood is formed of a fiber-reinforced resin as in Patent Literature 1 and Patent Literature 2, the weight of the reel seat is larger.

Alternatively, the hood can be formed in a larger thickness to prevent damage on the hood, but such a hood degrades the appearance of the reel seat and the fishing rod. Additionally, a hood made of metal increases the weight more significantly.

One object of the present invention is to provide a reel seat allowing reinforcement of a hood for retaining a reel leg while maintaining the appearance and restricting the increase in weight, and a fishing rod having such a reel seat. Other objects of the embodiments of the present invention will be apparent with reference to the entire description in this specification.
Document US 4726139 A discloses a reel seat comprising a reel seat body provided on a rod section of a fishing rod, a fixed hood, a movable hood, and a fiber-reinforced resin sheet extending over an outer circumference of the fixed hood and an outer circumference of the reel seat body.

A reel seat according to the present invention comprises the technical features of independent claim 1. Preferred embodiments are set out in the dependent claims. The present invention is further related to a fishing rod comprising such a reel seat, as defined in independent claim 7.

The fiber-reinforced resin sheet extends over the outer circumference of the fixed hood and the outer circumference of the reel seat body, and the reinforcement fibers extend in a direction slanted or orthogonal with respect to a longitudinal direction of the rod. Therefore, even when a tension is imparted on the fixed hood by the reel leg in a direction away from the fishing rod, the reinforcement fibers may support the fixed hood. Thus, the fixed hood can be reinforced with the fiber-reinforced resin sheet of the embodiment. Additionally, the fixed hood reinforced with the fiber-reinforced resin sheet may include less amount of fiber-reinforced resin and have a smaller weight as compared to a fixed hood entirely formed of a fiber-reinforced resin. The fiber-reinforced resin sheet including reinforcement fibers is typically thin and thus may maintain the appearance.

As stated above, the embodiments of the present invention provide a reel seat allowing reinforcement of a hood for retaining a reel leg while maintaining the appearance and restricting the increase in weight, and a fishing rod having such a reel seat.

### BRIEF DESCRIPTION OF THE DRAWINGS

Fig. 1 is a plain view of a reel seat according to an embodiment of the invention.
Fig. 2 is a side view of a reel seat according to an embodiment of the invention.
Fig. 3 is a plain view of a reel seat having a fiber-reinforced resin sheet including reinforcement fibers.
Fig. 4 is a side view of a reel seat having a fiber-reinforced resin sheet including reinforcement fibers.
Fig. 5 is a sectional view along the V-V line in Fig. 4.

### DESCRIPTION OF EXAMPLE EMBODIMENTS

Various embodiments of the present disclosure will now be described with reference to the attached drawings. In the drawings, the same or similar components are denoted by the same or similar reference signs, and the detailed description of the same or similar components is appropriately omitted.

As shown in the attached drawings, a reel seat 10 according to one embodiment of the present invention may include a tubular reel seat body 12 through which a rod 30 of a fishing rod is to be inserted, a fixed hood 16, and a movable hood 18. The reel seat body 12 may have a reel leg setting surface 14 which has a plain profile and on which a leg (not shown) of the reel is to be set. The reel seat body 12 may be integrally formed by injection molding using various synthetic resins such as methyl meta-acrylate.

The fixed hood 16 according to an embodiment of the present invention may be disposed on a rod tip-side end of the reel leg setting surface 14 and may retain one end of the leg of the reel. The movable hood 18 according to an embodiment of the present invention may be disposed on a butt-side end of the reel leg setting surface 14 and may retain the other end of the leg of the reel. In the embodiment, the reel seat body 12 and the fixed hood 16 may be integrally formed. The reel seat body 12 and the fixed hood 16 may be formed of different members. When a reel is mounted, the opposite ends of the leg of the reel may be received by an opening 16a formed in the hood 16 and an opening 18a formed in the hood 18, respectively.

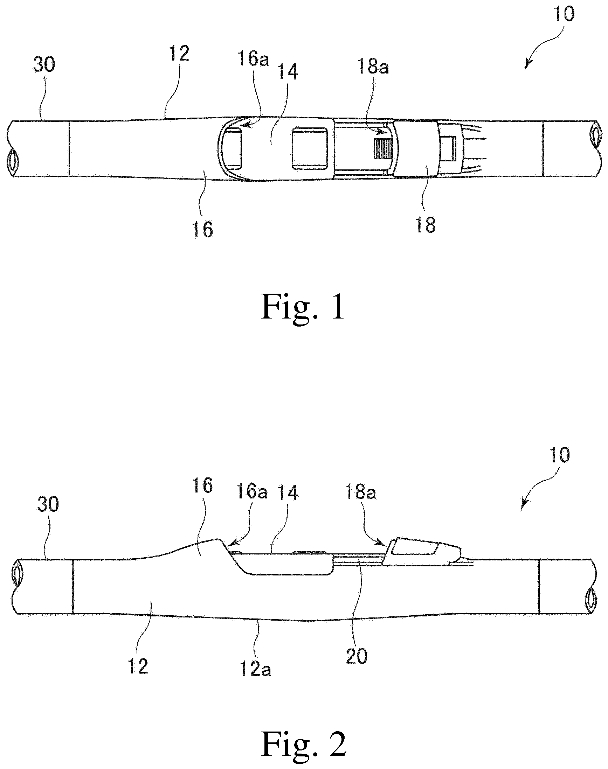

In an embodiment of the present invention, the movable hood 18 may be disposed so as to be movable toward and away from the fixed hood 16 along guide portions (guide grooves) 20 formed in both longitudinal side surfaces of the rod 30. The guide portion 20 may be engaged with an engagement portion integrally formed with the movable hood 18. Thus, the movable hood 18 may be guided along the longitudinal direction of the reel seat 10 so as not to move off the reel seat body 12. In an embodiment of the present invention, the reel can be tightly fixed by turning down a securing lever (not shown) integrally provided on the movable hood 18 so as to engage a locking nail of the securing lever with a movable hood-engaging indented member (not shown) provided on the reel seat body 12. The movable hood 18 may also be a screw-type movable hood having a nut for tightly fixing the reel on the butt side. In Fig. 1, the fixed hood 16 is positioned on the rod tip side, while the movable hood 18 is positioned on the butt side. This positional relationship may also be reversed. That is, the fixed hood 16 may be positioned on the butt side, and the movable hood 18 may be positioned on the rod tip side.

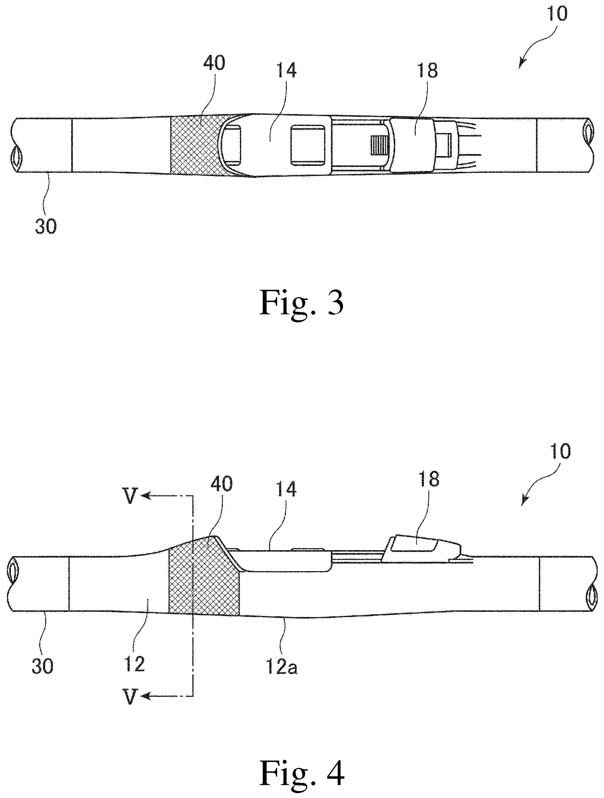

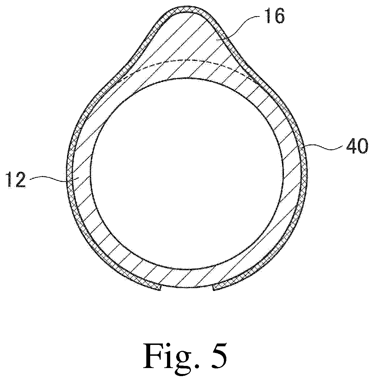

As shown in Figs. 3 and 4, the reel seat body 12 thus configured may have a fiber-reinforced resin sheet 40 extending over the outer circumference of the fixed hood 16 and the outer circumference of the reel seat body 12. The reel seat body 12 of this embodiment may have a cylindrical section in the longitudinal direction of the fishing rod. Fig. 5 is a sectional view along the V-V line in Fig. 4. As shown in Fig. 5, the fixed hood 16 of this embodiment may have a curved surface different from that of the reel seat body 12 in the sectional view in the longitudinal direction of the fishing rod. When a tension is imparted on the fixed hood 16 by the reel leg in the direction away from the fishing rod, a stress may be concentrated on the portion where the cylindrical curved surface of the reel seat body 12 is continuous to the curved surface of the fixed hood (inflection point). In this embodiment, the inflection point may be reinforced with the fiber-reinforced resin sheet 40 extending over the outer circumference of the fixed hood 16 and the outer circumference of the reel seat body 12. As shown in Fig. 4, the fiber-reinforced resin sheet 40 may extend behind the reel seat body 12. The fiber-reinforced resin sheet 40 may be formed by impregnating reinforcement fibers with a resin. The resin with which the reinforcement fibers are impregnated may be a thermoplastic resin such as polypropylene (PP) or polyamide 6 (PA6). The resin part of the fiber-reinforced resin sheet 40 may be formed of a thermosetting resin. The fiber-reinforced resin sheet 40 may be formed in a rectangular shape wherein long reinforcement fibers are arranged in the same direction. Further, the fiber-reinforced resin sheet 40 may have a shape conforming to the shape of the outer circumference of the fixed hood 16 and the shape of the outer circumference of the reel sheet body 12. The fiber-reinforced resin sheet 40 may be formed in a knit wherein reinforcement fibers are knitted together or formed in a fabric wherein reinforcement fibers are woven.

The reinforcement fibers of the fiber-reinforced resin sheet 40 according to an embodiment of the present invention may be composed of, e.g., glass fibers, continuous glass fibers, carbon fibers, aramid fibers, Kevlar fibers, polyethylene fibers, or other high strength fibers. The reinforcement fibers may extend over the entire length of the fiber-reinforced resin sheet 40. The fiber-reinforced resin sheet 40 including reinforcement fibers extending over the entire length thereof may be formed by impregnating, with a resin, reinforcement fibers having a length substantially equal to the entire length of the fiber-reinforced resin sheet 40. The reinforcement fibers extending over the entire length of the fiber-reinforced resin sheet 40 may be cleaved when the fiber-reinforced resin sheet 40 is being formed into a shape or used. As a result, the fiber-reinforced resin sheet 40 according to an embodiment of the present invention may include reinforcement fibers shorter than the entire length thereof. Thus, the fiber-reinforced resin sheet 40 of the present invention may include reinforcement fibers inevitably cut short in forming and use.

If the reinforcement fibers in the fiber-reinforced resin sheet 40 extend along the direction in which the rod 30 carrying the reel seat extends, when the reel is pulled in a direction away from the rod due to a tension in the fishing line, the tension imparted by the reel leg may concentrate on a part of reinforcement fibers in the fiber-reinforced resin sheet 40, and the fiber-reinforced resin sheet 40 may be cleaved. Thus, the fiber-reinforced resin sheet 40 according to the present invention is arranged on the reel seat body 12 such that the reinforcement fibers therein are slanted or orthogonal with respect to the longitudinal direction of the rod 30. In the fiber-reinforced resin sheet 40 according to an embodiment of the present invention, the angle between the direction of the reinforcement fibers extending and the rod 30 may be in a range from 45° to 90°. If the direction of the reinforcement fibers extending is slanted or orthogonal with respect to the longitudinal direction of the rod 30, when a tension is imparted on the fixed hood 16 by the reel in a direction away from the rod 30, the tension imparted on the fixed hood 16 by the reel leg may be dispersed among a plurality of fibers in the fiber-reinforced resin sheet 40. Thus, the fiber-reinforced resin sheet 40 can be prevented from being cleaved, thereby achieving reinforcement of the fixed hood 16.

At least a part of the resin material in the fiber-reinforced resin sheet 40 according to the present invention is heat-welded onto the reel seat body 12. Through heat welding, the resin material serving as a matrix of the fiber-reinforced resin sheet 40 can be tightly adhered to the reel seat body 12.

The matrix of the fiber-reinforced resin sheet 40 according to the present invention is formed of the same resin material as the reel seat body 12. In this case, the feel on the fiber-reinforced resin sheet 40 may be similar to that on the reel seat body 12. Additionally, when the fiber-reinforced resin sheet 40 is heat-welded onto the reel seat body 12, the matrix of the fiber-reinforced resin sheet 40 can be integrated with and tightly bound to the reel seat body 12. The resin material of the matrix of the fiber-reinforced resin sheet 40 may be a thermosetting resin.

In an embodiment of the present invention, a recess for accommodating the fiber-reinforced resin sheet 40 may be provided in a region in the outer surface of the reel seat body 12 and the outer surface of the fixed hood 16 facing the fiber-reinforced resin sheet 40. The fiber-reinforced resin sheet 40 accommodated in such a recess can be prevented from being displaced. In an embodiment of the present invention, the recess may be configured to have a thickness (depth) substantially equal to the thickness of the fiber-reinforced resin sheet 40. Thus, since the back surface 12a of the reel seat body 12 is flush with the fiber-reinforced resin sheet 40, the appearance may not be degraded. The size of the recess in the longitudinal direction of the rod 30 may be the same as the width of the fiber-reinforced resin sheet 40 in the longitudinal direction of the rod 30. Thus, since the entirety of the recess is filled with the fiber-reinforced resin sheet 40, and the back surface 12a of the reel seat body 12 is flush with the fiber-reinforced resin sheet 40, the appearance may not be degraded. The thickness (depth) of the recess may be larger than the thickness of the fiber-reinforced resin sheet 40 mounted.

One embodiment of a method of fabricating the reel seat configured as above will be described below. First, a fiber-reinforced resin sheet may be prepared by impregnating reinforcement fibers with a thermoplastic resin such as polypropylene (PP) or polyamide 6 (PA6). In this fiber-reinforced resin sheet, the reinforcement fibers such as carbon fibers may extend over the substantially entire length of the sheet. One example of the fiber-reinforced resin sheet may be the above described fiber-reinforced resin sheet 40. Next, the fiber-reinforced resin sheet heated may be formed, by using a forming die, into a shape suited to be placed on the reel seat body, more specifically, a shape covering the outer circumference of the fixed hood and the outer circumference of the reel seat body. After the reel seat is mounted on the rod, the fiber-reinforced resin sheet thus formed may be mounted on the reel seat body by, e.g., heat-welding or ultrasonic welding such that the reinforcement fibers in the fiber-reinforced resin sheet extend in a direction slanted or orthogonal with respect to the longitudinal direction of the rod. Thus, the reel sheet according to an embodiment of the present invention may be obtained.

The dimensions, material, and arrangement of the elements described herein are not limited to those explicitly described for the embodiments. The elements are susceptible of modifications for desired dimensions, materials, and arrangements within the scope of the present invention. The elements other than those explicitly described herein can be added to the described embodiments; and part of the elements described for the embodiments can be omitted.

### LIST OF REFERENCE NUMBERS

- 10: reel seat
- 12: reel seat body
- 14: reel leg setting surface
- 16: fixed hood
- 18: movable hood
- 20: guide groove
- 30: rod
- 40: fiber-reinforced resin sheet

## Claims

1. A reel seat (10) comprising:
a reel seat body (12) provided on a rod (30) of a fishing rod;
a fixed hood (16) provided on the reel seat body (12) and configured to receive one end of a reel leg;
a movable hood (18) provided on the reel seat body (12) so as to be movable with respect to the fixed hood (16) and configured to receive the other end of the reel leg; and
a fiber-reinforced resin sheet (40) provided so as to extend over an outer circumference of the fixed hood (16) and an outer circumference of the reel seat body (12) and including reinforcement fibers extending over a substantially entire length of the fiber-reinforced resin sheet (40),
wherein the reinforcement fibers in the fiber-reinforced resin sheet (40) extend in a direction slanted or orthogonal with respect to the longitudinal direction of the rod (30),
wherein the reel seat body (12) is formed of a first resin material, the fiber-reinforced resin sheet (40) is formed by impregnating the reinforcement fibers with a second resin material, and the first resin material and the second resin material are the same, and
wherein at least part of resin material in the fiber-reinforced resin sheet (40) is heat-welded to the reel seat body (12).

2. The reel seat (10) of claim 1, wherein an angle at which the reinforcement fibers are slanted with respect to the longitudinal direction of the rod ranges from 45° to 90°.

3. The reel seat (10) of claim 1, wherein a recess for accommodating the fiber-reinforced resin sheet (40) is formed in the outer circumference of the fixed hood (16) and the outer circumference of the reel seat body (12).

4. The reel seat (10) of claim 3, wherein a thickness of the fiber-reinforced resin sheet (40) is the same as a thickness of the recess.

5. The reel seat (10) of claim 1, wherein the reinforcement fibers are at least one selected from a group consisting of glass fibers, continuous glass fibers, carbon fibers, aramid fibers, Kevlar fibers, and polyethylene fibers.

6. The reel seat (10) of claim 1, wherein an end of the fixed hood (16) on the movable hood (18) side is covered with the fiber-reinforced resin sheet (40).

7. A fishing rod (30) having the reel seat (10) of any one of claims 1 to 6.

## Patentansprüche

1. Spulenhalter (10), mit:
einem Spulenhalterkörper (12), der an einer Rute (30) einer Angelrute vorgesehen ist;
eine feste Kappe (16), die auf dem Spulenhalterkörper (12) vorgesehen und konfiguriert ist, um ein Ende eines Spulenstiels aufzunehmen;
eine bewegliche Kappe (18), die auf dem Spulenhalterkörper (12) vorgesehen ist, um in Bezug auf die feste Kappe (16) beweglich zu sein, und konfiguriert ist, um das andere Ende des Spulenstiels aufzunehmen; und
eine faserverstärkte Harzfolie (40), die vorgesehen ist, um sich über einen Außenumfang der festen Haube (16) und einen Außenumfang des Spulenhalterkörpers (12) zu erstrecken und Verstärkungsfasern aufweist, die sich über eine im Wesentlichen gesamte Länge der faserverstärkten Harzfolie (40) erstrecken,
wobei sich die Verstärkungsfasern in der faserverstärkten Harzfolie (40) in einer Richtung erstrecken, die in Bezug auf die Längsrichtung der Rute (30) schräg oder orthogonal ist,
wobei der Spulenhalterkörper (12) aus einem ersten Harzmaterial gebildet ist, die faserverstärkte Harzfolie (40) durch Imprägnieren der Verstärkungsfasern mit einem zweiten Harzmaterial gebildet ist und das erste Harzmaterial und das zweite Harzmaterial gleich sind, und
wobei mindestens ein Teil des Harzmaterials in der faserverstärkten Harzfolie (40) mit dem Spulenhalterkörper (12) heißgeschweißt ist.

2. Spulenhalter (10) nach Anspruch 1, bei dem ein Winkel, in dem die Verstärkungsfasern in Bezug auf die Längsrichtung der Stange geneigt sind, von 45° bis 90° reicht.

3. Spulenhalter (10) nach Anspruch 1, bei dem eine Aussparung zur Aufnahme der faserverstärkten Harzfolie (40) im Außenumfang der festen Kappe (16) und im Außenumfang des Spulenhalterkörpers (12) ausgebildet ist.

4. Spulenhalter (10) nach Anspruch 3, bei dem eine Dicke der faserverstärkten Harzfolie (40) gleich einer Dicke der Aussparung ist.

5. Spulenhalter (10) nach Anspruch 1, bei dem die Verstärkungsfasern mindestens eines aus einer Gruppe sind, die aus Glasfasern, kontinuierlichen Glasfasern, Kohlefasern, Aramidfasern, Kevlarfasern und Polyethylenfasern besteht.

6. Spulenhalter (10) nach Anspruch 1, bei dem ein Ende der festen Kappe (16) auf der Seite der beweglichen Kappe (18) mit der faserverstärkten Harzfolie (40) abgedeckt ist.

7. Angelrute (30) mit dem Spulenhalter (10) nach einem der Ansprüche 1 bis 6.

## Revendications

1. Porte-moulinet (10) comprenant :
un corps de porte-moulinet (12) prévu sur une canne (30) d'une canne à pêche ;
un capuchon fixe (16) prévu sur le corps de porte-moulinet (12) et configuré pour recevoir une extrémité d'un bras de moulinet ;
un capuchon mobile (18) prévu sur le corps de porte-moulinet (12) de manière à être mobile par rapport au capuchon fixe (16) et configuré pour recevoir l'autre extrémité du bras de moulinet ; et
une feuille de résine renforcée de fibres (40) prévue de manière à s'étendre sur une circonférence externe du capuchon fixe (16) et une circonférence externe du corps de porte-moulinet (12) et comportant des fibres de renforcement s'étendant sur essentiellement toute la longueur de la feuille de résine renforcée de fibres (40),
dans lequel les fibres de renforcement dans la feuille de résine renforcée de fibres (40) s'étendent dans une direction inclinée ou orthogonale par rapport à la direction longitudinale de la canne (30),
dans lequel le corps de porte-moulinet (12) est formé d'un premier matériau de résine, la feuille de résine renforcée de fibres (40) est formée par imprégnation des fibres de renforcement avec un deuxième matériau de résine, et le premier matériau de résine et le deuxième matériau de résine sont identiques, et
dans lequel au moins une partie du matériau de résine dans la feuille de résine renforcée de fibres (40) est thermosoudée sur le corps de porte-moulinet (12).

2. Porte-moulinet (10) de la revendication 1, dans lequel un angle selon lequel les fibres de renforcement sont inclinées par rapport à la direction longitudinale de la canne se trouve dans la plage allant de 45° à 90°.

3. Porte-moulinet (10) de la revendication 1, dans lequel un évidement pour recevoir la feuille de résine renforcée de fibres (40) est formé dans la circonférence externe du capuchon fixe (16) et la circonférence externe du corps de porte-moulinet (12).

4. Porte-moulinet (10) de la revendication 3, dans lequel une épaisseur de la feuille de résine renforcée de fibres (40) est identique à une épaisseur de l'évidement.

5. Porte-moulinet (10) de la revendication 1, dans lequel les fibres de renforcement sont au moins des fibres choisies dans le groupe consistant en des fibres de verre, des fibres de verre continues, des fibres de carbone, des fibres d'aramide, des fibres de Kevlar et des fibres de polyéthylène.

6. Porte-moulinet (10) de la revendication 1, dans lequel une extrémité du capuchon fixe (16) sur le côté capuchon mobile (18) est recouverte de la feuille de résine renforcée de fibres (40).

7. Canne à pêche (30) ayant le porte-moulinet (10) de l'une quelconque des revendications 1 à 6.
